# EUROPÄISCHE PATENTSCHRIFT

(11) **EP 2 536 609 B1**
(45) Veröffentlichungstag und Bekanntmachung des Hinweises auf die Patenterteilung: **22.04.2020**
(21) Anmeldenummer: 11706172.1
(22) Anmeldetag: 18.02.2011
(51) Int. Cl.: B60T 11/22, B60T 11/26, B60T 17/06

(54) **HAUPTZYLINDER-BEHÄLTERARMATUR**
MASTER CYLINDER-RESERVOIR ARRANGEMENT
MAÎTRE-CYLINDRE-RÉSERVOIR ARMATURE

(30) Priorität: 19.02.2010 DE 102010008670
(43) Veröffentlichungstag der Anmeldung: 26.12.2012
(73) Patentinhaber: Gustav Magenwirth GmbH & Co. KG, 72574 Bad Urach (DE); Bayerische Motoren Werke Aktiengesellschaft, 80809 München (DE)
(72) Erfinder: SCHMAUDER, Werner, 72584 Hülben (DE); SEIDL, Josef, 84130 Dingolfing (DE); KRAUSS, Sebastian, 81541 München (DE); DAMOSER, Christoph, 80992 München (DE); SCHATZBERGER, Uwe, 85435 ErdIng (DE)
(74) Vertreter: Friese Goeden Patentanwälte PartGmbB
(86) Internationale Anmeldenummer: PCT/EP2011/000801
(87) Internationale Veröffentlichungsnummer: WO 2011/101165

(56) Entgegenhaltungen:
- WO-A1-2009/071160
- DE-A1-102009 038 425
- FR-A1- 2 769 275
- JP-A- 56 028 042
- JP-A- 2006 111 112

## Beschreibung

Die Erfindung betrifft eine Geberarmatur gemäß dem Oberbegriff von Anspruch 1.

Hydraulikflüssigkeiten in Ausgleichsbehältern von Motorradgeberarmaturen neigen zum Schäumen.

Aus der JP 2006111112 A ist es bekannt, in dem Ausgleichsbehälter einen Schwimmer anzuordnen, der die Schaumbildung behindern soll.

Aus der WO 2009/07110 A1 ist es bekannt, den Ausgleichsbehälter separat von dem Geberzylinder der Geberarmatur anzuordnen und elastisch zu lagern.

Die JP 56 028042 A, die FR 2 769 275 A1 und die DE 10 2009 038425 A1 offenbaren eine Geberarmatur gemäß dem Oberbegriff von Anspruch 1.

Keine der bekannten Lösungen bietet eine kompakte Bauweise im Zusammenhang mit einer zufrieden stellenden bzw. akzeptablen Unterdrückung der Schaumbildung der Hydraulikflüssigkeit im Ausgleichsbehälter.

Der Erfindung liegt daher die Aufgabe zugrunde, eine Geberarmatur gemäß dem Oberbegriff von Anspruch 1 anzugeben, bei der der Ausgleichsbehälter an dem Geberzylinder montiert ist und eine Schaumbildung der Hydraulikflüssigkeit in dem Ausgleichsbehälter vermindert wird.
Die Aufgabe der Erfindung wird mit einer Geberarmatur gemäß den Merkmalen von Anspruch 1 gelöst. Vorteilhafte Ausgestaltungen der Erfindung sind in den abhängigen Ansprüchen angegeben.

Gemäß einer Ausführung der Erfindung wird eine Geberarmatur für eine hydraulische Fahrzeugbremse (beispielsweise hand- oder fußbetätigte Bremse) oder Kupplungseinrichtung eines lenkergeführten Fahrzeugs angegeben, insbesondere eines Motorrads, mit einem Geberzylinder und einem Ausgleichsbehälter für Hydraulikflüssigkeit, wobei der Ausgleichsbehälter mit einer Schwingungsdämpfungseinrichtung gelagert ist, wobei die Schwingungsdämpfungseinrichtung zwischen dem Ausgleichsbehälter und dem Geberzylinder angeordnet ist, und/oder eine Dichtung zur Abdichtung der Flüssigkeitsverbindung zwischen dem Geberzylinder und dem Ausgleichsbehälter vorgesehen ist, die eine Relativbewegung zwischen dem Geberzylinder und dem Ausgleichsbehälter ermöglicht, wobei die Dichtung einen ersten Dichtungsabschnitt zur Abdichtung der Hydraulikflüssigkeit auf dem Weg zwischen dem Geberzylinder und dem Ausgleichsbehälter und einen zweiten Dichtungsabschnitt zur Abdichtung der Hydraulikflüssigkeit auf dem Weg zwischen dem Geberzylinder und dem Ausgleichsbehälter aufweist.

Erfindungsgemäß kann die Schwingungsdämpfungseinrichtung elastische Dämpfungselemente aufweisen. Dabei können die elastischen Dämpfungselemente vorzugsweise ringförmig ausgebildet sein.

Erfindungsgemäß können die Dämpfungselemente der Schwingungsdämpfungseinrichtung um die Dichtung zur Abdichtung der Flüssigkeitsverbindung zwischen dem Geberzylinder und dem Ausgleichsbehälter herum angeordnet sein. Beispielsweise können zwei Dämpfungselemente vorgesehen werden, die auf sich gegenüberliegenden Seiten der Dichtung angeordnet sind. Alternativ oder zusätzlich kann ein weiteres oder können mehrere weitere Dämpfungselemente vorgesehen werden.

Erfindungsgemäß können die Dämpfungselemente Federdämpfungselemente und/oder pneumatische Dämpfungselemente und/oder hydraulische Dämpfungselemente und/oder elektromagnetische Dämpfungselemente und/oder Reibelemente (innere und/oder äußere Reibung) umfassen.

Erfindungsgemäß kann die Schwingungsdämpfungseinrichtung auch ein (gegebenenfalls auch nur ein) Dämpfungselement aufweisen, das vorzugsweise um die Dichtung zur Abdichtung der Flüssigkeitsverbindung zwischen dem Geberzylinder und dem Ausgleichsbehälter herum ausgebildet ist, wobei das Dämpfungselement vorzugsweise ringförmig bzw. kreisringförmig ausgebildet ist.

Erfindungsgemäß können das bzw. die elastischen Dämpfungselemente einen V-förmigen Querschnitt aufweisen. Das bzw. die elastischen Dämpfungselemente sind dabei vorzugsweise derart ausgebildet, dass die Spitze (d.h. das untere Teil des V) des V-förmigen Querschnitts bezogen auf den Kreisring nach innen gerichtet ist. Alternativ kann die Spitze des V-förmigen Querschnitts auch bezogen auf den Kreisring nach außen gerichtet sein. Die elastischen Dämpfungselemente sind bevorzugt einstückig ausgebildet. Alternativ können die elastischen Dämpfungselemente auch geteilt ausgebildet sein, beispielsweise zweiteilig, vorzugsweise derart, dass jedes der beiden Teile im Querschnitt derart ausgebildet ist, dass es jeweils ein Bein des V des V-förmigen Querschnitts bildet.

Erfindungsgemäß können die elastischen Dämpfungselemente aus Gummi und/oder Kunststoff und/oder Metall und/oder Schaumstoff und/oder einem anderen dem Fachmann als für Dämpfungselemente geeignetes Material bekannten Material ausgebildet sein.

Erfindungsgemäß kann die Dichtung einen elastischen Ausgleichsabschnitt aufweisen, der vorzugsweise balgartig ausgebildet ist. Derartige Ausführungen der Erfindung haben den Vorteil, dass das gewünschte axiale und/oder radiale Spiel zwischen dem Ausgleichsbehälter und dem Geberzylinder auf besonders einfache Art realisiert werden kann. Dabei kann der elastische Ausgleichsabschnitt zwischen dem ersten Dichtungsabschnitt und dem zweiten Dichtungsabschnitt angeordnet und/oder ausgebildet sein.

Erfindungsgemäß kann die Dämpfungseinrichtung auch zumindest ein oder mehrere in die Dichtung zur Abdichtung der Flüssigkeitsverbindung zwischen dem Geberzylinder und dem Ausgleichsbehälter integrierte Dämpfungselemente aufweisen.

Erfindungsgemäß kann ein Adapter vorgesehen sein, der mit dem Geberzylinder verbunden ist und mit der Dichtung zur Abdichtung der Flüssigkeitsverbindung zwischen dem Geberzylinder und dem Ausgleichsbehälter gegenüber dem Geberzylinder abgedichtet sein. Dabei kann der Ausgleichsbehälter über die Dämpfungseinrichtung an dem Adapter befestigt sein.

Erfindungsgemäß kann der Ausgleichsbehälter eine Zwischenplatte aufweisen, wobei die Verbindung des Ausgleichsbehälters mit dem Geberzylinder über die Zwischenplatte erfolgt. Diese Ausführung der Erfindung hat den Vorteil, dass bestehende Werkzeuge für bekannte Ausgleichsbehälter weiterverwendet werden können. Alternativ können die Befestigungsabschnitte auch in den Ausgleichsbehälter integriert sein.

Erfindungsgemäß kann die Dichtung in einer Spannhülse angeordnet sein. Dabei kann die Spannhülse Schnapphaken aufweisen. Diese Ausführung der Erfindung hat den Vorteil, dass die Dichtflächen der Zwischenplatte bzw. des Ausgleichsbehälters, an denen die Dichtung anliegt, gratfrei ausgebildet werden können, weil keine Hinterschneidungen zur Sicherung der Dichtung erforderlich sind. Daher kann eine gute Dichtigkeit sichergestellt werden.

Gemäß einer Ausführung der Erfindung wird ein Dämpfungselement mit einer in der Aufsicht ringförmigen Form angegeben, wobei der Querschnitt des Rings V-förmig ausgebildet ist.

Das Dämpfungselement kann dabei vorzugsweise derart ausgebildet sein, dass die Spitze (d.h. das untere Teil des V) des V-förmigen Querschnitts bezogen auf den Kreisring nach innen gerichtet ist. Alternativ kann die Spitze des V-förmigen Querschnitts auch bezogen auf den Kreisring nach außen gerichtet sein.

Erfindungsgemäß kann das Dämpfungselement aus Gummi und/oder Kunststoff und/oder Metall und/oder Schaumstoff und/oder einem anderen dem Fachmann als für Dämpfungselemente geeignetes Material bekannten Material ausgebildet sein.

Die Erfindung wird im Folgenden anhand der in den Figuren gezeigten Ausführungsbeispiele näher beschrieben.
- Fig. 1: zeigt eine perspektivische Ansicht einer Geberarmatur gemäß einer Ausführung der Erfindung.
- Fig. 2: zeigt eine Teilansicht des Ausgleichsbehälters mit einer Zwischenplatte der Geberarmatur von Fig. 1 von unten.
- Fig. 3.: zeigt eine Teilschnittansicht der Geberarmatur von Fig. 1 entlang der Linie III-III von Fig. 2.
- Fig. 4.: zeigt eine Teilschnittansicht der Geberarmatur von Fig. 1 entlang der Linie IV-IV von Fig. 2.
- Fig. 5.: zeigt eine vergrößerte Detailansicht von Fig. 4.
- Fig. 6.: zeigt eine Teilschnittansicht der Geberarmatur von Fig. 1 entlang der Linie VI-VI von Fig. 2.
- Fig. 7.: zeigt eine vergrößerte Detailansicht von Fig. 6.
- Fig. 8: zeigt eine Aufsicht eines erfindungsgemäßen Dämpfungselements.
- Fig. 9: zeigt eine Seitenansicht des Dämpfungselements von Fig. 8.
- Fig. 10: zeigt Seitenansichten möglicher Varianten von Dämpfungselementen.

In der Beschreibung des Ausführungsbeispiels werden folgende Bezugszeichen verwendet:
- 1: Betätigungshebel
- 10: Ausgleichsbehälter
- 20: Zwischenplatte
- 30: Geberzylinder
- 32: Schraube
- 40: Spannhülse
- 41: Schnapphaken
- 50: Dichtung
- 51: Abdichtungsabschnitt (Geberzylinder 30 - Adapter 60)
- 52: Ausgleichsabschnitt (für Relativbewegung zwischen Ausgleichsbehälter 10 und Geberzylinder 30 in radialer und/oder axialer Richtung)
- 53: Abdichtungsabschnitt (radiale Dichtung zwischen Zwischenplatte 20 und Spannhülse 40)
- 54: Aussparung (Raum zur Ausdehnung der Dichtung 50 bei radialer Pressung)
- 55: Abdichtungsabschnitt (axiale Dichtung zwischen Zwischenplatte 20 und Spannhülse 40)
- 60: Adapter
- 62: Gewindebohrung
- 70: Stützring
- 80: Schwingungsdämpfungseinrichtung
- 81: Buchse
- 82: Schraube
- 83: Dämpfungselement
- 83': Dämpfungselement

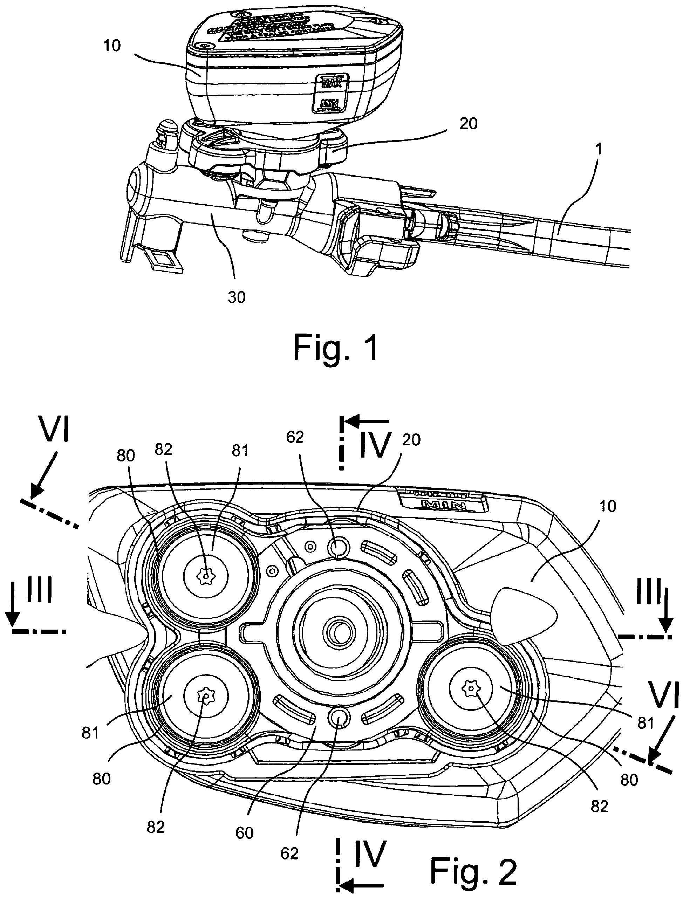

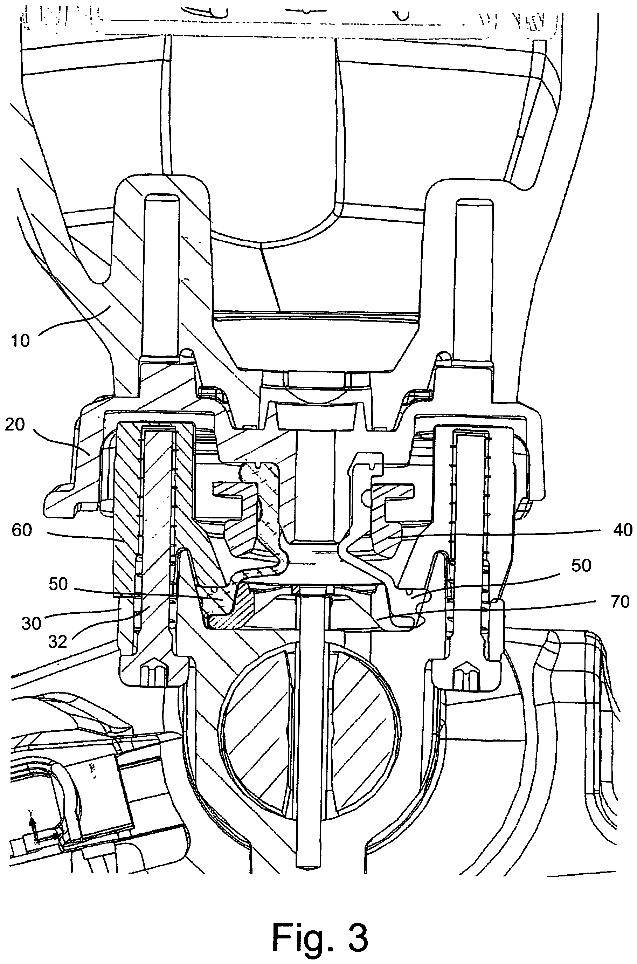

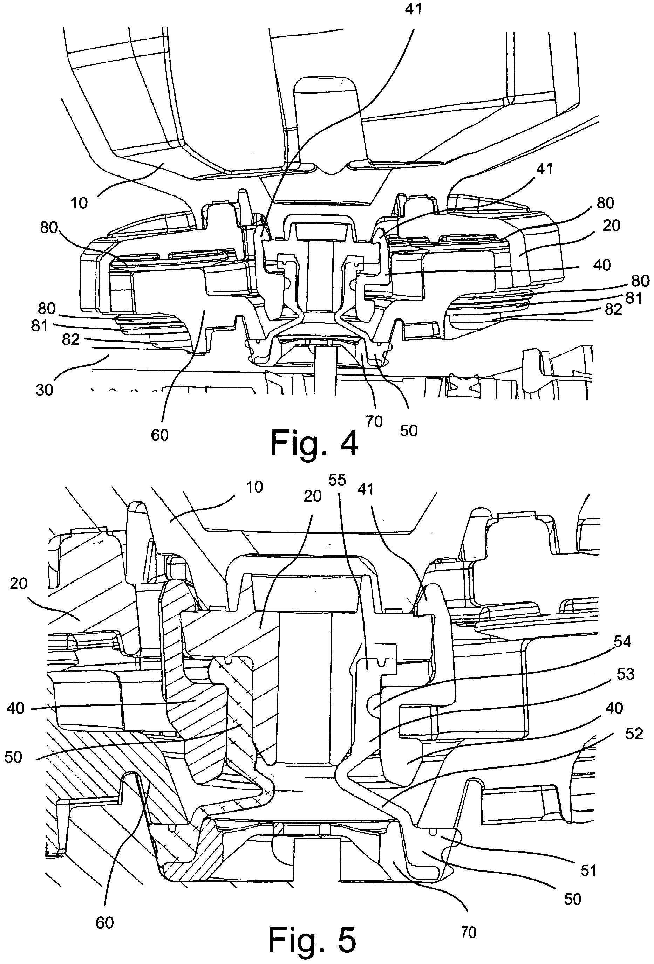

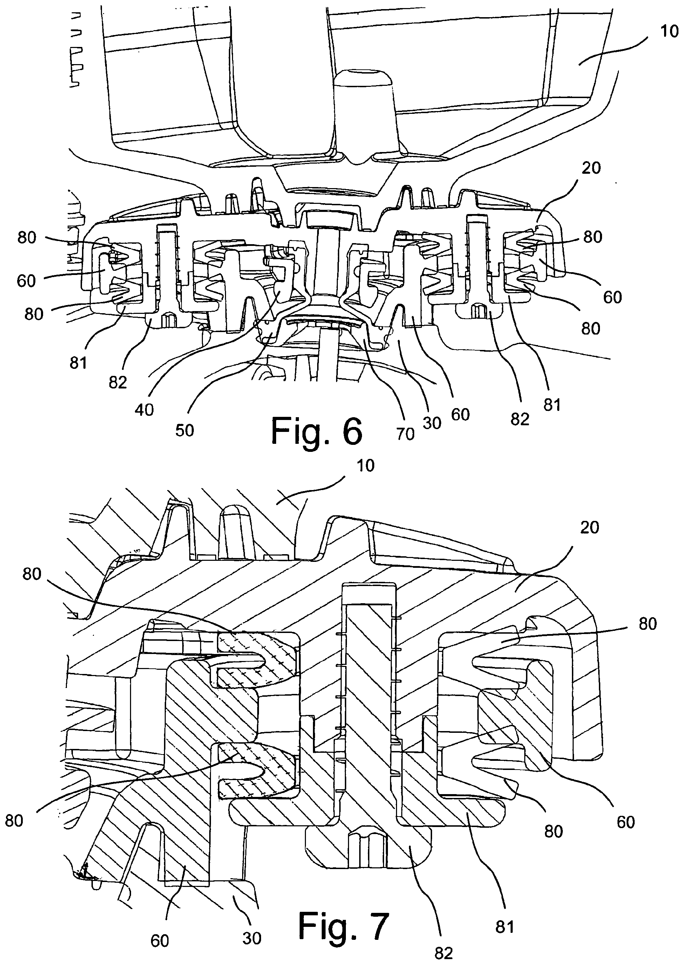

Die Figuren 1 bis 7 zeigen ein Ausführungsbeispiel einer Geberarmatur gemäß der Erfindung.

Die Geberarmatur ist Teil einer hydraulischen Fahrzeugbremse oder Kupplungseinrichtung eines lenkergeführten Fahrzeugs, insbesondere eines Motorrads.

Zur Betätigung der Geberarmatur ist ein Betätigungshebel 1 vorgesehen.

Die Geberarmatur weist einen Geberzylinder 30 und einen Ausgleichsbehälter 10 für Hydraulikflüssigkeit auf, wobei der Ausgleichsbehälter 10 mit einer Schwingungsdämpfungseinrichtung 80 gelagert ist, die elastische Dämpfungselemente 83 bzw. 83' aufweist.

Die Schwingungsdämpfungseinrichtung 80 mit den Dämpfungselementen 83 ist zwischen dem Ausgleichsbehälter 10 und dem Geberzylinder 30 angeordnet.

Der Geberzylinder 30 weist eine Nachlaufbohrung auf, die mit dem Ausgleichsbehälter 10 verbunden ist. Zur Abdichtung der Flüssigkeitsverbindung zwischen dem Geberzylinder 30 und dem Ausgleichsbehälter 10 ist eine Dichtung 50 vorgesehen. Die Dichtung ist derart ausgebildet, dass sie eine Relativbewegung zwischen dem Geberzylinder 30 und dem Ausgleichsbehälter 10 ermöglicht.

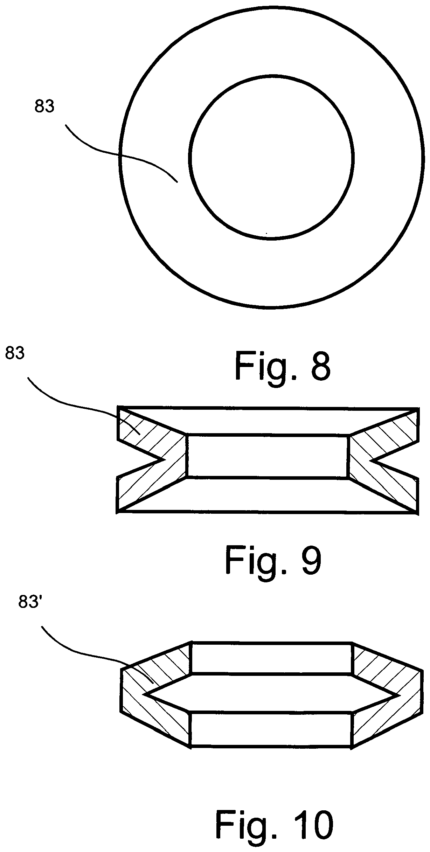

Die elastischen Dämpfungselemente 83 bzw. 83' sind ringförmig ausgebildet, wie man beispielsweise in der Aufsicht von Fig. 8 sehen kann, und haben einen V-förmigen Querschnitt, wie man beispielsweise in den Figuren 9 und 10 sehen kann.

Bei der in Fig. 9 gezeigten Ausführung sind die elastischen Dämpfungselemente 83 derart ausgebildet, dass die Spitze (d.h. das untere Teil des V) des V-förmigen Querschnitts bezogen auf den Kreisring nach innen gerichtet ist.

Bei der in Fig. 10 gezeigten alternativen Ausführungsform der Dämpfungselemente 83' ist die Spitze des V-förmigen Querschnitts bezogen auf den Kreisring nach außen gerichtet.

Die elastischen Dämpfungselemente 83, 83' sind bevorzugt einstückig ausgebildet. Sie können aber auch geteilt ausgebildet sein, beispielsweise zweiteilig, vorzugsweise derart, dass jedes der beiden Teile im Querschnitt derart ausgebildet ist, dass es jeweils ein Bein des V des V-förmigen Querschnitts bildet.

Die Dichtung 50 weist einen elastischen Ausgleichsabschnitt 52 auf, der vorzugsweise balgartig ausgebildet ist. Dieser Ausgleichsabschnitt ist extrem elastisch ausgebildet, beispielsweise durch eine dünne aber hinreichende Wandstärke und eine geeignete Materialwahl, damit eine Relativbewegung zwischen Geberzylinder 30 und Ausgleichsbehälter 10 erfolgen kann.

Die Dichtung 50 weist einen ersten Dichtungsabschnitt 51 zur Abdichtung der Hydraulikflüssigkeit auf dem Weg zwischen dem Geberzylinder 30 und dem Ausgleichsbehälter 10 und einen zweiten Dichtungsabschnitt 53 zur Abdichtung der Hydraulikflüssigkeit auf dem Weg zwischen dem Geberzylinder 30 und dem Ausgleichsbehälter 10 auf.

Der elastische Ausgleichsabschnitt 52 ist zwischen dem ersten Dichtungsabschnitt 51 und dem zweiten Dichtungsabschnitt 53 angeordnet und ausgebildet. Somit kann der erste Dichtungsabschnitt den Weg zwischen Geberzylinder 30 und Ausgleichsbehälter 10 gegenüber dem Geberzylinder 30 abdichten und der zweite Dichtungsabschnitt 53 den Weg zwischen Geberzylinder 30 und Ausgleichsbehälter 10 gegenüber dem Ausgleichsbehälter 10 abdichten.

Ein Adapter 60 ist an dem Geberzylinder 30 mit den Schrauben 32 befestigt, die in Gewindebohrungen 62 eingreifen, und mit dem ersten Abdichtungsabschnitt 51 der Dichtung 50 gegenüber dem Geberzylinder 30 abgedichtet.

Der Ausgleichsbehälter ist über die Dämpfungseinrichtung 80 an dem Adapter 60 befestigt.

Der Ausgleichsbehälter 10 weist eine Zwischenplatte 20 auf, die über die Dämpfungseinrichtung 80 mit dem Adapter 60 und damit mit dem Geberzylinder 30 verbunden ist. Die Verbindung des Ausgleichsbehälters 10 mit dem Geberzylinder 30 erfolgt somit über die Zwischenplatte 20.

Die Zwischenplatte 20 kann auch entfallen, wenn der Ausgleichsbehälter entsprechend modifiziert wird, d.h.

Ausgleichsbehälter und "Zwischenplatte" sind einstückig ausgebildet.

Der zweite Dichtungsabschnitt 53 der Dichtung 50 ist in einer Spannhülse 40 angeordnet, die Schnapphaken 41 aufweist.

Die Schnapphaken bieten den Vorteil, dass die Flächen, an denen die Dichtung 50 anliegt, gratfrei ausgebildet werden können, weil keine Hinterschneidungen zur Sicherung der Dichtung erforderlich sind. Daher kann eine gute Dichtigkeit sichergestellt werden.

Der Abdichtungsabschnitt 53 schafft eine radiale Dichtung zwischen der Zwischenplatte 20 und der Spannhülse 40. Die Aussparung 54 bietet einen Raum zur Ausdehnung der Dichtung 50 bei einer radialen Pressung zwischen der Spannhülse 40 und der Zwischenplatte 20. Ein weiterer Abdichtungsabschnitt 55 der Dichtung schafft eine axiale Dichtung zwischen der Zwischenplatte 20 und der Spannhülse 40. Alternativ kann auch ein Abdichtungsabschnitt mit einer Doppelfunktion (axiale und radiale Abdichtung) vorgesehen werden.

Zwischen dem Geberzylinder 30 und dem ersten Abdichtungsabschnitt 51 der Dichtung 50 ist ein Stützring 70 vorgesehen.

Die Schwingungsdämpfungseinrichtung 80 weist Buchsen 81 und Schrauben 82 auf, über die der Adapter 60 mit der Zwischenplatte 20 verbunden ist, wobei jeweils ein elastisches Dämpfungselement 83 zwischen Zwischenplatte 20 und dem Adapter 60 und ein weiteres elastisches Dämpfungselement 83 zwischen einer Buchse 81 und dem Adapter 60 vorgesehen ist. Bei der in den Figuren gezeigten Ausführung sind insgesamt drei derartige Verbindungen zwischen Adapter 60 und Zwischenplatte 20 vorgesehen.

Es ist klar, dass auch alternative von dem Schutzbereich mit erfasst werden sollen. Beispielsweise können auch eine, zwei oder mehr derartige Verbindungen zwischen Adapter und Zwischenplatte vorgesehen werden.

## Patentansprüche

1. Geberarmatur für eine hydraulische Fahrzeugbremse oder Kupplungseinrichtung eines lenkergeführten Fahrzeugs, insbesondere eines Motorrads, mit einem Geberzylinder (30) und einem Ausgleichsbehälter (10) für Hydraulikflüssigkeit, wobei der Ausgleichsbehälter (10) mit einer Schwingungsdämpfungseinrichtung (80) gelagert ist, die zwischen dem Ausgleichsbehälter (10) und dem Geberzylinder (30) angeordnet ist, wobei eine Dichtung (50) zur Abdichtung der Flüssigkeitsverbindung zwischen dem Geberzylinder (30) und dem Ausgleichsbehälter (10) vorgesehen ist, die eine Relativbewegung zwischen dem Geberzylinder (30) und dem Ausgleichsbehälter (10) ermöglicht,
**dadurch gekennzeichnet, dass** die Dichtung (50) einen ersten Dichtungsabschnitt (51) zur Abdichtung der Hydraulikflüssigkeit auf dem Weg zwischen dem Geberzylinder (30) und dem Ausgleichsbehälter (10) und einen zweiten Dichtungsabschnitt (53) zur Abdichtung der Hydraulikflüssigkeit auf dem Weg zwischen dem Geberzylinder (30) und dem Ausgleichsbehälter (10) aufweist.

2. Geberarmatur nach Anspruch 1, bei der die Schwingungsdämpfungseinrichtung (80) elastische Dämpfungselemente (83) aufweist.

3. Geberarmatur nach Anspruch 2, bei der die elastischen Dämpfungselemente (83) ringförmig ausgebildet sind.

4. Geberarmatur nach Anspruch 2 oder 3, bei der die elastischen Dämpfungselemente (83) einen V-förmigen Querschnitt aufweisen.

5. Geberarmatur nach einem der vorhergehenden Ansprüche, bei der die Dichtung (50) einen elastischen Ausgleichsabschnitt (52) aufweist, der vorzugsweise balgartig ausgebildet ist.

6. Geberarmatur nach Anspruch 5, bei der der elastische Ausgleichsabschnitt (52) zwischen dem ersten Dichtungsabschnitt (51) und dem zweiten Dichtungsabschnitt (53) angeordnet und/oder ausgebildet ist.

7. Geberarmatur nach einem der vorhergehenden Ansprüche, bei der ein Adapter (60) vorgesehen ist, der mit dem Geberzylinder (30) verbunden ist und mit der Dichtung (50) gegenüber dem Geberzylinder (30) abgedichtet ist.

8. Geberarmatur nach Anspruch 7, bei der der Ausgleichsbehälter (10) über die Dämpfungseinrichtung (80) an dem Adapter (60) befestigt ist.

9. Geberarmatur nach einem der vorhergehenden Ansprüche, bei der der Ausgleichsbehälter (10) eine Zwischenplatte (20) aufweist, wobei die Verbindung des Ausgleichsbehälters (10) mit dem Geberzylinder (30) über die Zwischenplatte (20) erfolgt.

10. Geberarmatur nach einem der vorhergehenden Ansprüche, bei der die Dichtung (50) in einer Spannhülse (40) angeordnet ist.

11. Geberarmatur nach Anspruch 10, bei der die Spannhülse (40) Schnapphaken (41) aufweist.

## Claims

1. Master fitting for a hydraulic vehicle brake or clutch device of a handlebar-controlled vehicle, in particular a motorbike, having a master cylinder (30) and an expansion tank (10) for hydraulic fluid, the expansion tank (10) being mounted with a vibration damping device (80), which is arranged between the expansion tank (10) and the master cylinder (30), a seal (50) for sealing the fluid connection being provided between the master cylinder (30) and the expansion tank (10) and allowing relative movement between the master cylinder (30) and the expansion tank (10),
**characterized in that** the seal (50) comprises a first sealing portion (51) for sealing the hydraulic fluid on the path between the master cylinder (30) and the expansion tank (10) and a second sealing portion (53) for sealing the hydraulic fluid on the path between the master cylinder (30) and the expansion tank (10).

2. Master fitting according to claim 1, in which the vibration damping device (80) has elastic damping elements (83).

3. Master fitting according to claim 2, in which the elastic damping elements (83) are of annular design.

4. Master fitting according to claim 2 or 3, in which the elastic damping elements (83) have a V-shaped cross-section.

5. Master fitting according to any of the preceding claims, in which the seal (50) has an elastic compensating portion (52), which is preferably of bellows-like design.

6. Master fitting according to claim 5, in which the elastic expansion portion (52) is arranged and/or formed between the first sealing portion (51) and the second sealing portion (53).

7. Master fitting according to any of the preceding claims, in which an adapter (60) is provided, which is connected to the master cylinder (30) and is sealed by means of the seal (50) against the master cylinder (30).

8. Master fitting according to claim 7, in which the expansion tank (10) is attached to the adapter (60) via the damping device (80).

9. Master fitting according to any of the preceding claims, in which the expansion tank (10) has an intermediate plate (20), the expansion tank (10) being connected to the master cylinder (30) via the intermediate plate (20).

10. Master fitting according to any of the preceding claims, in which the seal (50) is arranged in a clamping sleeve (40).

11. Master fitting according to claim 10, in which the clamping sleeve (40) has snap hooks (41).

## Revendications

1. Dispositif émetteur pour un frein hydraulique de véhicule ou un système d'embrayage d'un véhicule guidé par guidon, en particulier d'une motocyclette, comportant un cylindre émetteur (30) et un récipient de compensation (10) pour un liquide hydraulique,
dans lequel
le récipient de compensation (10) est monté avec un moyen d'amortissement de vibrations (80) qui est disposé entre le récipient de compensation (10) et le cylindre émetteur (30),
il est prévu un joint d'étanchéité (50) pour étancher la communication de liquide entre le cylindre émetteur (30) et le récipient de compensation (10), qui permet un mouvement relatif entre le cylindre émetteur (30) et le récipient de compensation (10),
**caractérisé en ce que**
le joint d'étanchéité (50) comprend une première portion d'étanchéité (51) pour l'étanchement vis-à-vis du liquide hydraulique sur le chemin entre le cylindre émetteur (30) et le récipient de compensation (10), et une seconde portion d'étanchéité (53) pour l'étanchement vis-à-vis du liquide hydraulique sur le chemin entre le cylindre émetteur (30) et le récipient de compensation (10).

2. Dispositif émetteur selon la revendication 1,
dans lequel
le moyen d'amortissement de vibrations (80) comprend des éléments d'amortissement élastiques (83).

3. Dispositif émetteur selon la revendication 2,
dans lequel
les éléments d'amortissement élastiques (83) sont réalisés en forme annulaire.

4. Dispositif émetteur selon la revendication 2 ou 3,
dans lequel
les éléments d'amortissement élastiques (83) présentent une section transversale en forme de V.

5. Dispositif émetteur selon l'une des revendications précédentes,
dans lequel
le joint d'étanchéité (50) présente une portion de compensation élastique (52) qui est réalisée de préférence sous forme de soufflet.

6. Dispositif émetteur selon la revendication 5,
dans lequel
la portion de compensation élastique (52) est disposée et/ou réalisée entre la première portion d'étanchéité (51) et la seconde portion d'étanchéité (53).

7. Dispositif émetteur selon l'une des revendications précédentes,
dans lequel
il est prévu un adaptateur (60) qui est relié au cylindre émetteur (30) et qui est étanché par rapport au cylindre émetteur (30) à l'aide du joint d'étanchéité (50).

8. Dispositif émetteur selon la revendication 7,
dans lequel
le récipient de compensation (10) est fixé à l'adaptateur (60) par le moyen d'amortissement (80).

9. Dispositif émetteur selon l'une des revendications précédentes,
dans lequel
le récipient de compensation (10) comprend une plaque intermédiaire (20), la liaison du récipient de compensation (10) au cylindre émetteur (30) étant réalisée par la plaque intermédiaire (20).

10. Dispositif émetteur selon l'une des revendications précédentes,
dans lequel
le joint d'étanchéité (50) est disposé dans une douille de serrage (40).

11. Dispositif émetteur selon la revendication 10,
dans lequel
la douille de serrage (40) présente des crochets d'encliquetage (41).
